# EUROPEAN PATENT SPECIFICATION

(11) **EP 4 336 650 B1**
(45) Date of publication and mention of the grant of the patent: **04.02.2026**
(21) Application number: 22911709.8
(22) Date of filing: 08.12.2022
(51) Int. Cl.: H01M 50/673, H01M 50/24, A62C 3/16, A62C 35/68, H01M 50/251, H01M 50/383, H01M 50/20

(54) **BATTERY PACK INCLUDING FIRE EXTINGUISHING WATER STORAGE TANK**
BATTERIEPAKET MIT LÖSCHWASSER-SPEICHERTANK
BLOC-BATTERIE AVEC RÉSERVOIR D'EAU D'EXTINCTION

(30) Priority: 23.12.2021 KR 20210185729; 07.11.2022 KR 20220147326
(43) Date of publication of application: 13.03.2024
(73) Proprietor: LG Energy Solution, Ltd., Seoul 07335 (KR)
(72) Inventor: LEE, Seong-Ju, Daejeon 34122 (KR); KIM, Ki-Youn, Daejeon 34122 (KR); KIM, Hyeon-Kyu, Daejeon 34122 (KR); MUN, Jeong-O, Daejeon 34122 (KR); PARK, Gi-Dong, Daejeon 34122 (KR); AHN, Jong-Kyu, Daejeon 34122 (KR); YUN, Young-Won, Daejeon 34122 (KR); LEE, Jae-Ki, Daejeon 34122 (KR)
(74) Representative: Plasseraud IP
(86) International application number: PCT/KR2022/019986
(87) International publication number: WO 2023/121076

(56) References cited:
- EP-A1- 4 297 145
- CN-A- 112 587 834
- DE-A1- 102014 200 180
- JP-A- 2012 252 909
- JP-A- 2018 536 273
- KR-A- 20170 019 041
- KR-A- 20170 084 699
- US-A1- 2020 189 624

## Description

### TECHNICAL FIELD

The present disclosure relates to a battery, and more particularly, to a battery pack configured to ensure safety even when a thermal event occurs.

The present application claims priority to Korean Patent Application Nos. 10-2021-0185729 and 10-2022-0147326, respectively filed on December 23, 2021 and November 7, 2022 in the Republic of Korea.

### BACKGROUND ART

Currently commercialized secondary batteries include nickel cadmium batteries, nickel hydride batteries, nickel zinc batteries, and lithium secondary batteries. Among them, lithium secondary batteries are in the spotlight because they have almost no memory effect compared to nickel-based secondary batteries, and thus, have advantages of free charge/discharge, very low self-discharge rate, and high energy density.

A lithium secondary battery mainly uses a lithium-based oxide and a carbon material as a positive electrode active material and a negative electrode active material, respectively. A lithium secondary battery includes an electrode assembly in which a positive electrode plate and a negative electrode plate coated with a positive electrode active material and a negative electrode active material are located with a separator therebetween, and a casing in which the electrode assembly is air-tightly accommodated together with an electrolyte, that is, a battery case.

In general, according to a shape of a casing, lithium secondary batteries may be classified into can-type secondary batteries in which an electrode assembly is received in a metal can, and pouch-type secondary batteries in which an electrode assembly is received in a pouch of an aluminum laminate sheet.

Secondary batteries have been widely used not only in small devices such as portable electronic devices but also in medium and large-sized devices such as electric vehicles and energy storage systems (ESSs), and their use has rapidly increased. Moreover, recently, the use of residential battery packs for storing power has gradually increased.

Various battery packs including residential battery packs include a plurality of battery cells (secondary batteries) to increase a capacity and/or output. **In** particular, a plurality of battery cells are often densely arranged in a very narrow space to increase energy density of a battery pack.

Safety is one of most important issues in such a battery pack configuration. For example, when thermal runaway occurs in any one of a plurality of battery cells included in a battery pack, a flame or venting gas may be ejected from the battery cell, and may be propagated to other battery cells to cause thermal runaway of the other battery cells. Accordingly, when thermal propagation between battery cells is not suppressed at an early stage, thermal runaway may occur in all battery cells included in a battery pack, and a fire or explosion of the entire battery pack may be caused, thereby resulting in human and material damage. In particular, when a fire or explosion occurs in a battery pack for a house, the safety of people living in the house may be damaged and a house fire may be caused, thereby resulting in great damage.

In the prior art:
document US2020/189624 A1 relates to a battery pack including a battery module including one or more battery cells, a control module connected to the battery module to manage the battery module, and a fire extinguishing tank containing a fire extinguishing agent and coupled to at least one of the battery modules through nozzles;
document DE 10 2014 200180 A1 describes a rail vehicle in which a dielectric fluid is located in a tank above electric energy storage modules with battery cells and in which a fire extinguishing line is provided to supply the dielectric fluid in a module where a cell fire occurs.

JP2012252909A discloses a battery pack according to the preamble of claim 1.

### DISCLOSURE

### Technical Problem

The present disclosure is designed to solve the problems of the related art, and therefore the present disclosure is directed to providing a battery pack to which a fire extinguishing tank is applied to rapidly control a thermal event occurring in the battery pack.

Also, the present disclosure is directed to providing a battery pack configured to prevent venting gas from being propagated from a battery module in which a thermal event occurs to a battery module in which a thermal event does not occur from among a plurality of battery modules and to allow a fire extinguishing agent to be intensively injected only into the battery module in which the thermal event occurs.

However, technical objectives to be achieved by the present disclosure are not limited thereto, and other unmentioned technical objectives will be apparent to one of ordinary skill in the art from the description of the present disclosure.

### Technical Solution

A battery pack according to the present disclosure includes a plurality of battery modules including module cases, wherein side surfaces of the module cases in which battery cells are accommodated face each other and a injection hole is formed in a top surface of each of the module cases, and a fire extinguishing tank unit containing a fire extinguishing agent, located over the plurality of battery modules, and configured to supply the fire extinguishing agent only into a battery module in which a thermal event occurs from among the plurality of battery modules through the injection holes.

The battery pack further includes sealing members each provided on each battery module, and disposed on the top surface of the module case to surround a circumference of the injection hole of each battery module and protrude beyond the injection hole, wherein the fire extinguishing tank unit is seated on upper portions of the plurality of battery modules and contacts the sealing members to individually seal the upper portions of the plurality of battery modules.

The plurality of battery modules may be two battery modules, wherein each of the two battery modules is configured to receive the fire extinguishing agent from the fire extinguish tank unit through the injection hole provied therein.

Each of the sealing members may be made of a fire resistant material and disposed in a closed-loop shape along an edge of the top surface of the module case.

Each of the sealing members may include any one of silicone rubber, a graphite expandable foam, a metal gasket, and a non-asbestos gasket.

Heat dissipation sheets may be provided on rear surfaces of the facing side surfaces of the module cases.

The module case may include a middle case having a hollow structure to have an inner space in which the battery cells are accommodated, a bottom plate coupled to a lower end of the middle case, and a top plate including the injection hole and coupled to an upper end of the middle case.

The battery pack may further include a module connect bottom cover provided to integrally support and fix lower portions of the plurality of battery modules, wherein each of the plurality of battery modules is provided so that the bottom plate is fixedly coupled to an upper portion of the module connect bottom cover.

The fire extinguishing tank unit may be configured to, in response to gas ejected from each battery module to the fire extinguishing tank unit, selectively supply the fire extinguishing agent only into the battery module from which the gas is ejected from among the plurality of battery modules through the injection hole of each battery module.

The fire extinguishing tank unit may include a tank body provided to accommodate the fire extinguishing agent, and a plurality of ejection members having one side coupled to communicate with an inside of the tank body and the other side protruding downward from the tank body, wherein the plurality of ejection members respectively face the injection holes of the plurality of battery modules, and are configured to be broken by high temperature or impact to eject the fire extinguishing agent of the tank body.

Each of the plurality of ejection members may include any one of a glass bulb, a plastic material, and a vinyl material.

The fire extinguishing agent may include at least one of an antifreezing solution, salt water, and insulating oil.

The battery pack may further include a control module located on the fire extinguishing tank unit and configured to control a charging operation or a discharging operation of the battery cells of the plurality of battery modules.

The fire extinguishing tank unit may include a connection member to electrically connect the control module to the plurality of battery modules, when the control module is seated on the fire extinguishing tank unit.

According to another aspect of the present disclosure, there is provided an energy storage system including the battery pack.

### Advantageous Effects

According to an aspect of the present disclosure, a battery pack with improved safety may be provided.

In particular, according to an embodiment of the present disclosure, even when a thermal event occurs in a battery pack, the thermal event may be rapidly controlled.

Furthermore, when venting gas or the like is generated in a battery cell from among a plurality of battery cells included in the battery pack, a temperature of the battery cell may be rapidly lowered by injecting a fire extinguishing agent.

Accordingly, according to this aspect of the present disclosure, propagation of thermal runaway or a fire to other battery cells due to heat or venting gas may be effectively prevented.

Also, according to an aspect of the present disclosure, venting gas may be prevented from being transferred from a battery module in which a thermal event occurs to a battery module in which a thermal event does not occur, and a fire extinguishing agent may be supplied only to the battery module in which the thermal event occurs because a glass bulb (of a fire extinguishing tank) corresponding to the side in which the thermal event occurs is broken.

Accordingly, according to this aspect of the present disclosure, a fire of the battery module in which the thermal event occurs from among a plurality of battery modules may be intensively and effectively suppressed.

Also, according to this aspect of the present disclosure, because the battery module in which a thermal event does not occur may be continuously used, efficiency is improved.

Also, according to an aspect of the present disclosure, a liquid fire extinguishing agent having a freezing point lower than that of water may be injected to immediately suppress a fire.

Accordingly, according to this aspect, even when used under various external environments such as temperature or humidity, fire suppression performance by a fire extinguishing agent may be safely ensured.

For example, according to an embodiment of the present disclosure, because a fire extinguishing liquid does not easily freeze even when exposed to a temperature below zero for a long time, a battery pack may be installed and used outdoors.

Accordingly, this aspect of the present disclosure may be more advantageously applied to battery packs used outdoors, in particular, residential battery packs.

In addition, various other additional effects may be achieved by various embodiments of the present disclosure. The present disclosure may have various other effects, which will be described in detail in each embodiment, or descriptions of effects that may be easily inferred by one of ordinary skill in the art will be omitted.

### DESCRIPTION OF DRAWINGS

FIG. 1 is an exploded perspective view schematically illustrating a configuration of a battery pack, according to a first embodiment of the present disclosure.
FIG. 2 is a perspective view schematically illustrating a configuration of a battery pack, according to a second embodiment of the present disclosure.
FIG. 3 is a partially exploded perspective view illustrating the battery pack of FIG. 2.
FIG. 4 is a schematic bottom perspective view illustrating a control module of FIG. 3.
FIG. 5 is a partially exploded perspective view illustrating battery modules of FIG. 3.
FIG. 6 is a view illustrating an inner surface of a case cover of a middle case of FIG. 5.
FIG. 7 is a perspective view schematically illustrating a lower portion of a tank body, according to the second embodiment of the present disclosure.
FIG. 8 is a perspective view illustrating a tank bottom bracket coupled to the tank body of FIG. 7.
FIG. 9 is a perspective view illustrating a state where a tank outer case is coupled to a configuration of FIG. 8.
FIG. 10 is a partial cut-away perspective view schematically illustrating a configuration in which a fire extinguishing agent may be injected into a plurality of battery modules by a fire extinguishing take unit of FIG. 9.
FIG. 11 is a view illustrating a sealing member applied to a top surface of each battery module, according to the second embodiment of the present disclosure.
FIG. 12 is a view schematically illustrating a sealing structure between a plurality of battery modules and a fire extinguishing tank unit, according to the second embodiment of the present disclosure.
FIG. 13 is an enlarged view illustrating a portion W of FIG. 11.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the present disclosure, so it should be understood that other equivalents and modifications could be made thereto without departing from the scope of the present disclosure.

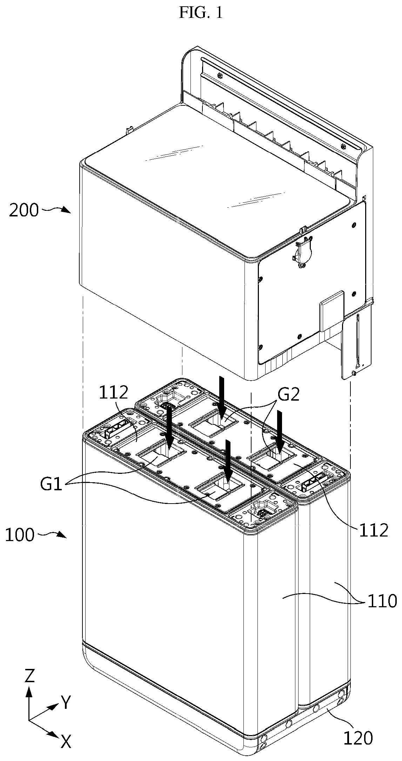

FIG. 1 is an exploded perspective view schematically illustrating a configuration of a battery pack, according to a first embodiment of the present disclosure.

Referring to FIG. 1, a battery pack according to the present disclosure includes a battery module 100 and a fire extinguishing tank unit 200.

The battery module 100 may include one or more battery cells. Each battery cell may refer to a secondary battery. The secondary battery may include an electrode assembly, an electrolyte, and a battery case. The secondary battery may be manufactured as a pouch-type secondary battery, a cylindrical secondary battery, or a prismatic battery according to an outer shape.

Also, the battery module 100 may include a battery cell and a module case 110 for accommodating the battery cell. In particular, the module case 110 may have an empty inner space in which a plurality of battery cells may be accommodated. The module case 110 may include injection holes G1, G2 formed by making at least a part of a top surface of the module case 110 open. Also, the module case 110 may be configured to allow a fluid to move from the injection holes G1, G2 to the inner space in which the battery cells are located.

The fire extinguishing tank unit 200 may contain a fire extinguishing agent. The fire extinguishing agent may be any of various materials for suppressing or extinguishing a fire or lowering a temperature. Also, the fire extinguishing tank unit 200 may be located over the battery module 100. In particular, the fire extinguishing tank unit 200 may be configured to supply the fire extinguishing agent into the battery module 100 through the injection holes G1, G2 formed in the top surface of the module case 110.

According to this embodiment of the present disclosure, a thermal event of the battery module 100 may be rapidly controlled by the fire extinguishing tank located over the battery module 100. That is, according to the embodiment, because the fire extinguishing agent is discharged by the fire extinguishing tank unit 200 into the battery module 100, a battery cell in which an event occurs may be cooled or a fire generated in the battery module 100 may be rapidly extinguished. Accordingly, because thermal propagation between battery cells is blocked or the spread of a fire is prevented, the battery pack with improved safety may be provided.

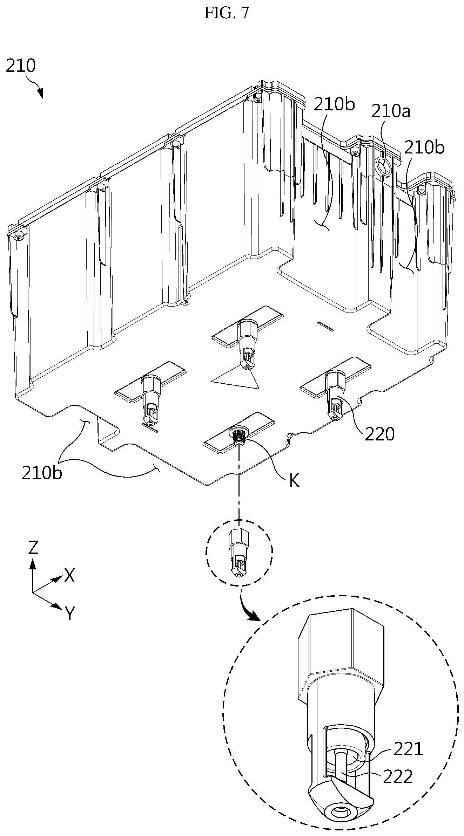

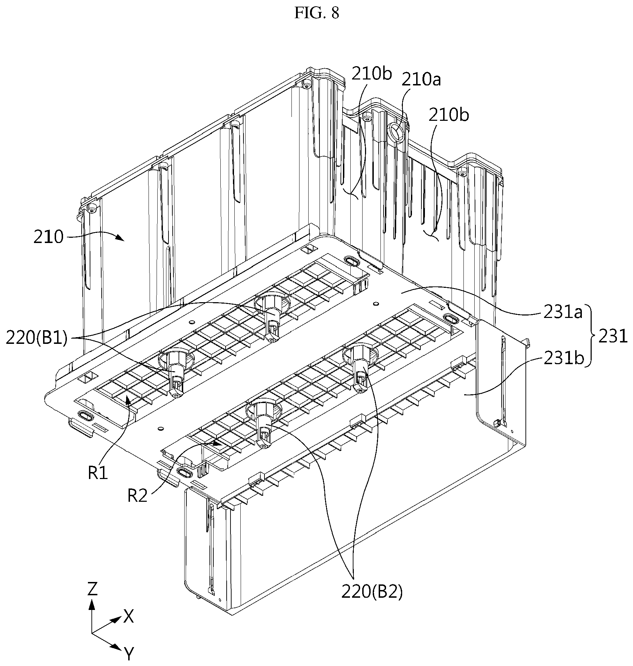

In particular, the fire extinguishing tank unit 200 may be configured so that, when venting gas is discharged from the battery module 100, the fire extinguishing agent freely drops toward the battery module 100 due to the venting gas. For example, the fire extinguishing tank unit 200 may include a tank body 210 including a storage space in which the fire extinguishing agent may be accommodated, and an ejection member 220 functioning as a path through which the fire extinguishing agent may be ejected from the inside of the tank body 210 to the outside and provided under the tank body 210 (see FIGS 7 and 8). The ejection member 220 may include a discharge port 221. For example, the discharge port 221 may be usually blocked, and then may be broken by heat or pressure to be opened. In another example, the ejection member 220 may be provided so that the discharge port 221 is opened when gas is detected.

According to this configuration of the fire extinguishing tank unit 200, when venting gas is generated in the battery module 100, the venting gas may move toward the fire extinguishing tank unit 200 through the injection holes G1, G2 of the module case 110, and in this case the discharge port of the fire extinguishing tank unit 200 may be opened to allow the fire extinguishing agent to be discharged. As marked by an arrow in FIG. 1, the fire extinguishing agent may freely drop to be injected into the injection holes G1, G2 of the battery module 100.

Accordingly, a separate power source is not required to inject the fire extinguishing agent into the battery module 100, and the fire extinguishing agent may be rapidly injected. According to this embodiment of the present disclosure, efficient control of a battery cell whose temperature rises due to thermal runaway or the like may be made.

The fire extinguishing tank unit 200 may contain a liquid fire extinguishing agent. In this case, a free drop configuration of the fire extinguishing agent, that is, the fire extinguishing liquid, may be easily implemented, and the fire extinguishing liquid may be rapidly and smoothly introduced into the battery module 100, in particular, to a lower portion of the module case 110.

Also, the fire extinguishing liquid may include at least one of an antifreezing solution, salt water, and insulating oil. Preferably, the fire extinguishing liquid contained in the battery pack according to the present embodiment may be an antifreezing solution or salt water. Because the fire extinguishing liquid does not freeze even in an environment where a temperature is below zero, the fire extinguishing liquid may be used to suppress a fire, and because the volume of the fire extinguishing liquid does not change, an outer appearance of the fire extinguishing tank unit 200 may not be deformed. Accordingly, even when the battery pack according to the embodiment of the present disclosure is installed outdoors and a thermal event occurs in the battery pack in a state where an external temperature drops below zero, the battery pack may extinguish a fire by itself.

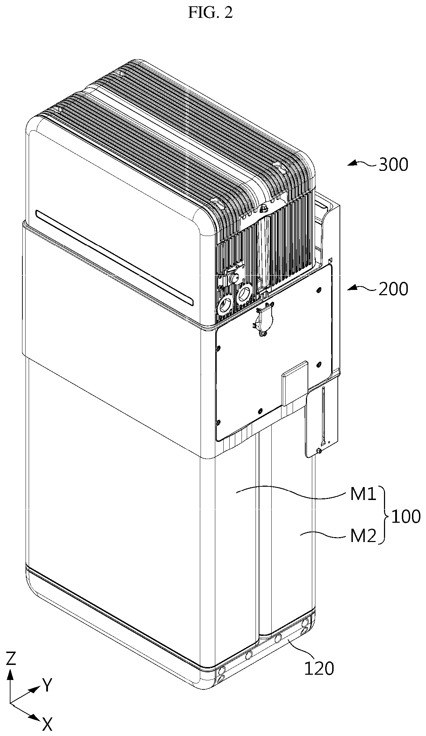

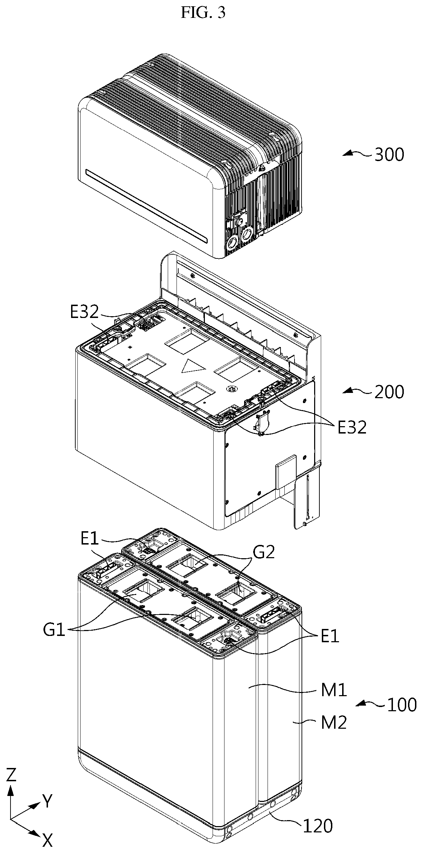

FIG. 2 is a perspective view schematically illustrating a configuration of a battery pack, according to a second embodiment of the present disclosure. FIG. 3 is a partially exploded perspective view illustrating the battery pack of FIG. 2.

Referring to FIGS. 2 and 3, a battery pack according to the present disclosure may further include a control module 300 located over the fire extinguishing tank unit 200.

The control module 300 may control an overall operation of the battery pack. **In** particular, the control module 300 may be electrically connected to the battery module 100 and may be configured to control a charging operation or a discharging operation of the battery module 100. Also, the control module 300 may be configured to measure, calculate, receive, or control various electrical, physical, and chemical characteristics of the battery module 100, a battery cell included in the battery module 100, or a surrounding environment thereof. For example, the control module 300 may measure, calculate, or control a voltage, current, temperature, state of charge (SOC), state of health (SOH), and internal resistance of the battery cell or the battery module 100.

The control module 300 may receive operating power from the battery module 100 to manage the battery module 100. Also, the control module 300 may transmit and receive various data to and from the battery module 100 or an external device through a wired or wireless communication network.

The control module 300 may include various electronic components such as a battery management system (BMS), a relay, and a current sensor. Also, the control module 300 may include a control housing in which the electronic components are accommodated.

Also, the control module 300 may include a pack terminal. The pack terminal may be configured to connect the battery pack to an external charging/discharging device. For example, the pack terminal may include an outlet, or a plug, or a connector to be connected to a commercial power source or a load. Also, the control module 300 may include a power path through which charging power and discharging power is transmitted and received to and from the battery module 100. The power path may function as a path through which charging/discharging power is transmitted and received between the pack terminal and the battery module 100.

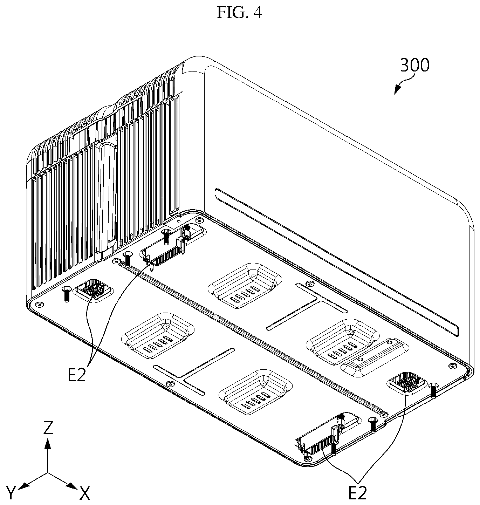

To this end, in the battery module 100, a module connector E1 for electrical connection may be provided at the top as shown in FIG. 3, and in the control module 300, a control connector E2 for electrical connection may be provided at the bottom as shown in FIG. 4. The fire extinguishing tank unit 200 may include a connection member. The connection member is an element for electrically connecting a plurality of battery modules 100 to the control module 300. The connection member may be located between the module connector E1 provided on the battery modules 100 and the control connector E2 provided on the control module 300 to connect the battery modules 100 to the control module 300.

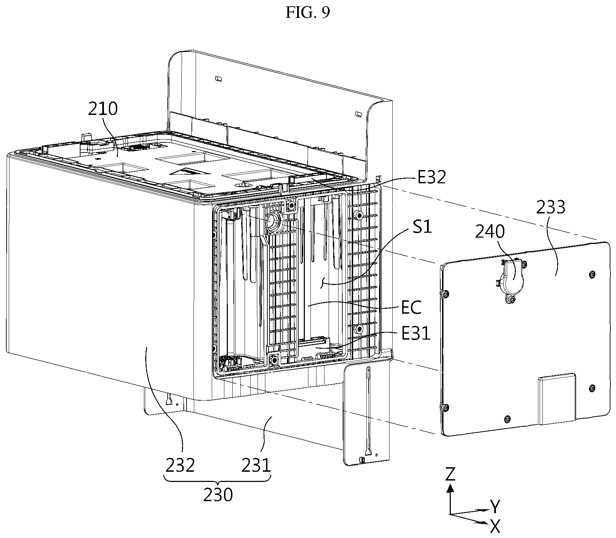

**In** a specific example, the connection member may be provided in the fire extinguishing tank unit 200 as a cable that extends long in one direction and allows power or an electrical signal to move therethrough. The connection member may include a cable EC (see FIG. 9) and tank connectors E31, E32 provided at both ends of the cable EC. For example, the connection member may include the first tank connector E32 located at an upper end of the fire extinguishing tank unit 200 in FIG. 3, and the first tank connector E32 may be connected in a plug-in manner to the control connector E2. Also, the connection member may include the second tank connector E31 located at a lower end of the first extinguishing tank unit 200, and the second tank connector E31 may be connected in a plug-in manner to the module connector E1.

According to the embodiment, the control module 300 may be electrically connected to the battery module 100 only by seating on the fire extinguishing tank unit 200.

Also, it is easy to separate the fire extinguishing tank unit 200 between the battery module 100 and the control module 300. Accordingly, it is easy to replace, maintain, or repair the fire extinguishing tank unit 200 when necessary, and furthermore, the fire extinguishing tank unit 200 may be omitted and the control module 300 may be directly seated on the battery module 100.

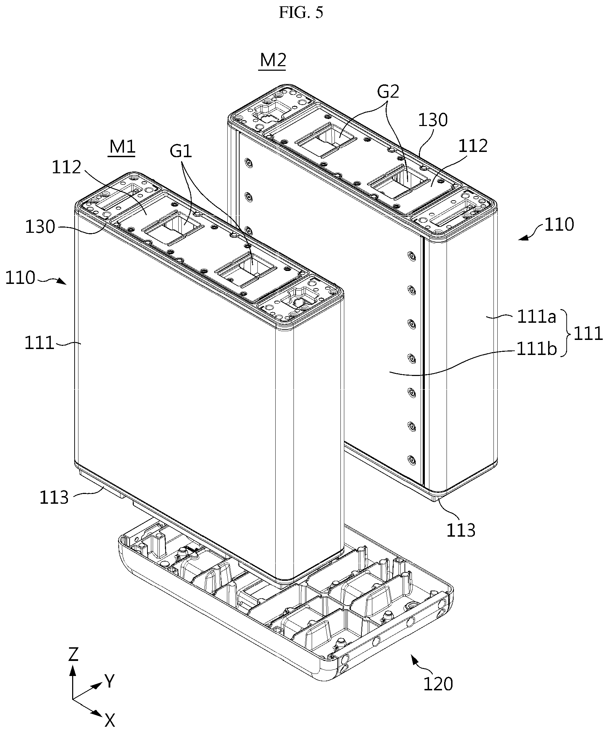

The battery pack may include a plurality of battery modules 100. For example, the plurality of battery modules 100 may include a first battery module M1 and a second battery module M2, as shown in FIGS. 3 and 5.

The first battery module M1 and the second battery module M2 may be located so that side surfaces face each other, and the injection holes G1, G2 are formed in top surfaces of the module cases 110.

The fire extinguishing tank unit 200 may be located over the two battery modules 100, and the fire extinguishing tank unit 200 may be configured to individually inject a fire extinguishing agent into the first battery module M1 and the second battery module M2 through the injection holes G1, G2 of the first battery module M1 and the second battery module M2.

In detail, each of the two battery modules 100 may include battery cells and the module case 110 in which the battery cells may be accommodated, as shown in FIG. 5. The module case 110 may include a middle case 111 having a hollow structure to have an inner space in which the battery cells may be accommodated, a bottom plate 113 coupled to a lower end of the middle case 111, and a top plate 112 including the injection hole G1, G2 and coupled to an upper end of the middle case 111. The top plate 112 may be an element corresponding to a top surface of the module case 110 described above.

The middle case 111 may be provided by combining at least two plates so that the battery cells and other components are easily accommodated or assembled in the inner space. For example, the middle case 111 according to the present embodiment may include a case body 111a with one side surface open, and a case cover plate 111b covering the side surface of the case body 111a and provided to be coupled to or decoupled from the case body 111a as shown in FIG. 5.

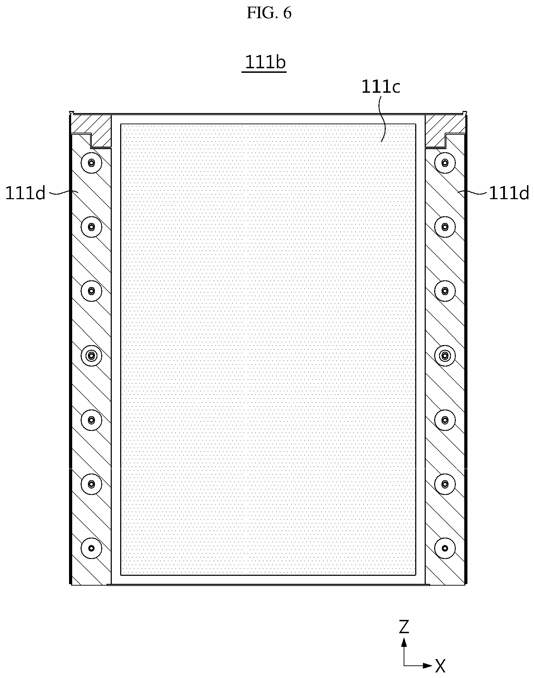

In the present embodiment, two battery modules 100 may be located so that the case cover plate 111b of the first battery module M1 and the case cover plate 111b of the second battery module M2 face each other. Also, as shown in FIG. 6, a heat dissipation sheet 111c may be attached to a rear surface, that is, an inner surface of the case cover plate 111b. The inner surface of the case cover plate 111b refers to a surface facing the inside of the module case 110. The heat dissipation sheet 111c may be, for example, a mica sheet having excellent heat resistance.

Also, the case body 111a and the case cover plate 111b may be coupled to each other by bolt fastening, and in this case, in order to prevent damage to and ensure airtightness at a bolt fastening portion between the case body 111a and the case cover plate 111b, an airtight pad 111d may be attached to the bolt fastening portion, for example, both edge lines of the case cover plate 111b as shown in FIG. 6. The flame retardant airtight pad 111d may include, for example, ethylene propylene diene monomer (EPDM) rubber.

In this configuration, two battery modules 100 may include the heat dissipation sheets 111c and the airtight pads 111d on inner surfaces of side surfaces of the module cases 110 facing each other. Accordingly, for example, when a thermal event occurs in battery cells provided in the first battery module M1, propagation of heat to the second battery module M2 may be prevented by the heat dissipation sheet 111c of the first battery module M1. Also, because the airtight pad 111d is applied to the bolt fastening portion between the case body 111a of the first battery module M1 and the case cover plate 111b, venting gas or flame may not be ejected to the outside through the bolt fastening portion.

Also, the battery pack may include a module connect bottom cover 120 provided to integrally support and fix lower portions of the plurality of battery modules 100.

In detail, referring to FIGS. 3 and 5, two battery modules 100 may be configured so that the bottom plate 113 is fixedly coupled to an upper portion of the module connect bottom cover 120. For example, two battery modules 100 may be configured so that the bottom plate 113 is fixedly coupled to an upper portion of the module connect bottom cover 120 by bolt fastening and snap-fit fastening methods. According to this configuration, as shown in FIG. 3, two battery modules 100 whose side surfaces face each other may be stably supported without being separated from each other by restraining their lower ends with one module connect bottom cover 120.

Next, the fire extinguishing tank unit 200 will be described in more detail with reference to FIGS. 7 to 10.

The fire extinguishing tank unit 200 according to the present disclosure may be configured to, in response to gas or flame ejected from each battery module 100 toward the fire extinguishing tank unit 200, selectively supply a fire extinguishing agent only to the battery module 100 from which the gas or flame is ejected from among the plurality of battery modules 100 through the injection hole G1, G2 of the battery module 100.

In detail, the fire extinguishing tank unit 200 may include the tank body 210, a plurality of ejection members 220, and a tank case 230.

The tank body 210 may include a storage space in which a fire extinguishing agent may be accommodated, and may be provided in a box shape having a certain level of airtightness so that a liquid fire extinguishing agent, that is, a fire extinguishing liquid, is not injected into the battery module 100. For example, the tank body 210 may be provided to have airtightness performance of IP 55 or more. Also, the tank body 210 may include a fire extinguishing agent injection hole 210a through which the fire extinguishing agent may be supplied. The fire extinguishing agent injection hole 210a may be provided on a top surface and/or a side surface of the tank body 210.

The plurality of ejection members 220 for spraying the fire extinguishing agent of the tank body 210 toward the battery module 100 may have one side coupled to communicate with the inside of the tank body 210 and the other side protruding downward from the tank body 210.

For example, a protruding connection port K may be provided at the bottom of the tank body 210 as shown in FIG. 7, and a screw thread may be provided on an outer circumferential surface of the of the connection port. The ejection member 220 may be provided on the connection port to be screwed to or released from the connection port.

Also, as described above, the ejection member 220 may include the discharge port 221, and the discharge port 221 may be usually blocked and then may be broken by heat or pressure to be opened. For example, as shown in FIG. 7, a glass bulb 222 may be mounted in the discharge port. The glass bulb 222 may be configured to be broken by high temperature or impact. For example, when the glass bulb 222 contacts venting gas discharged from the battery module 100, the glass bulb 222 may be broken by heat and pressure of the venting gas. Then, the discharge port of the ejection member 220 may be opened, and thus, the fire extinguishing agent in the tank body 210 may be discharged to the outside of the tank body 210. As an alternative to the glass bulb 222, a plastic or vinyl material that may be melted by high temperature may be used.

When the fire extinguishing tank unit 200 is seated on the battery modules 100, at least one of the ejection members 220 may be inserted into the injection holes G1, G2 of the battery modules 100. For example, the fire extinguishing tank unit 200 may be configured so that one ejection member 220 is inserted into each of the injection holes G1, G2 of the battery modules 100 of FIG. 3.

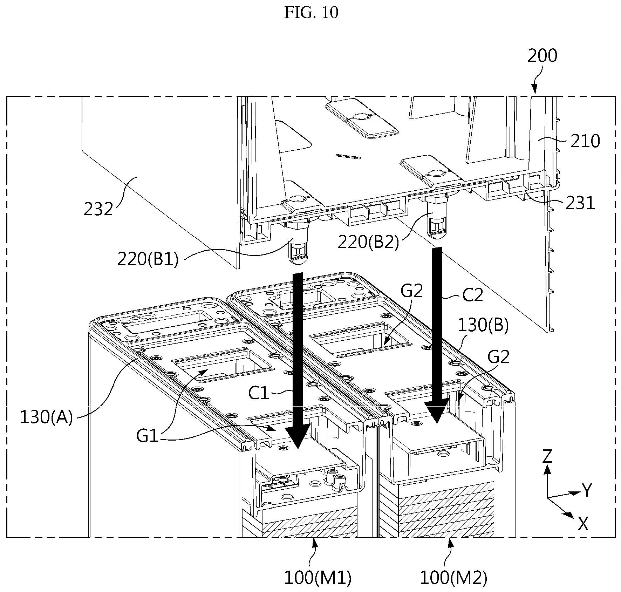

In particular, the ejection members 220 may be provided to respectively correspond to different battery modules 100. For example, as shown in FIGS. 8 and 10, in the battery pack in which the first battery module M1 and the second battery module M2 are arranged in a front-back direction (±Y direction), the fire extinguishing tank unit 200 located over the first battery moule M1 and second battery modules M2 may include a first ejection member B1 and a second ejection member B2. The first ejection member B1 may be located over the first battery module M1 to correspond to the first battery module M1, and the second ejection member B2 may be located over the second battery module M2 to correspond to the second battery module M2.

In this embodiment, when a thermal event occurs in the first battery module M1, the first ejection member B1 may be broken by venting gas or the like. Then, a fire extinguishing agent in the tank body 210 may be discharged from the first ejection member B1. Accordingly, as marked by an arrow C1 in FIG. 10, the fire extinguishing agent may be injected only into the first battery module M1 through the first ejection member B1, and may not be injected into the second battery module M2.

In contrast, when a thermal event occurs in the second battery module M2, the second ejection member B2 may be broken by venting gas or the like. Then, a fire extinguishing agent in the tank body 210 may be discharged from the second ejection member B2. Accordingly, as marked by an arrow C2 in FIG. 10, the fire extinguishing agent may be injected only into the second battery module M2 through the second ejection member B2, and may not be injected into the first battery module M1.

According to this embodiment of the present disclosure, when a plurality of battery modules 100 are included in the battery pack, because a fire extinguishing agent may be injected into each battery module 100, cooling, fire suppression, and heat propagation prevention using the fire extinguishing agent may be done more effectively.

The tank case 230 is an element for protecting the tank body 210 from the outside and more stably coupling the tank body 210 to upper portions of the plurality of battery modules 100.

Referring to FIGS. 8 and 9, the tank case 230 may include a tank bottom bracket 231 and an outer case 232.

As shown in FIG. 8, the tank bottom bracket 231 may include a support 231a that supports a lower portion of the tank body 210, and a guide portion 231b that is bent at a right angle with respect to the support 231a and guides assembly with the battery module 100. Also, the tank bottom bracket 231 may be formed of a material having high rigidity and excellent heat resistance.

The support 231a may include ejection member holes through which the ejection members 220 may pass and a connector hole through which the tank connector is exposed downward. Also, the support 231a may have a flat surface, and may include first and second areas R1 and R2 that are recessed from the flat surface as shown in FIG. 8. The first ejection members 220 may be provided in the first area R1 and the second ejection members 220 may be provided in the second area R2. A surface of the support 231a excluding the first area and the second area may be flat. In particular, a surface of the support 231a contacting a sealing member 130 described below may be flat without a stepped portion.

The outer case 232 may be provided on the tank body 210 and the tank bottom bracket 231 that are assembled as shown in FIG. 8 to surround an outer circumferential surface of the tank body 210.

In particular, a separation space S may be provided between the outer case 232 and at least one outer surface of the tank body 210. For example, referring to FIGS. 8 and 9, the tank body 210 may include a recessed portion 210b recessed inward on an outer surface in a left-right direction and a separation space S1 may be provided between the recessed portion 210b and an inner wall surface of the outer case 232. The cable EC of the connection member may be located in the separation space S1.

Also, the outer case 232 includes a detachable plate 233 covering a side surface of the tank body 210 on which the fire extinguishing agent injection hole 210a is located. Also, the detachable plate 233 may be detachable from the main body of the outer case 232 to shield the separation space. Also, the detachable plate 233 may include a case hole (not shown) at a position corresponding to the fire extinguishing agent injection hole 210a, and the case hole may be sealed with an injection hole stopper 240.

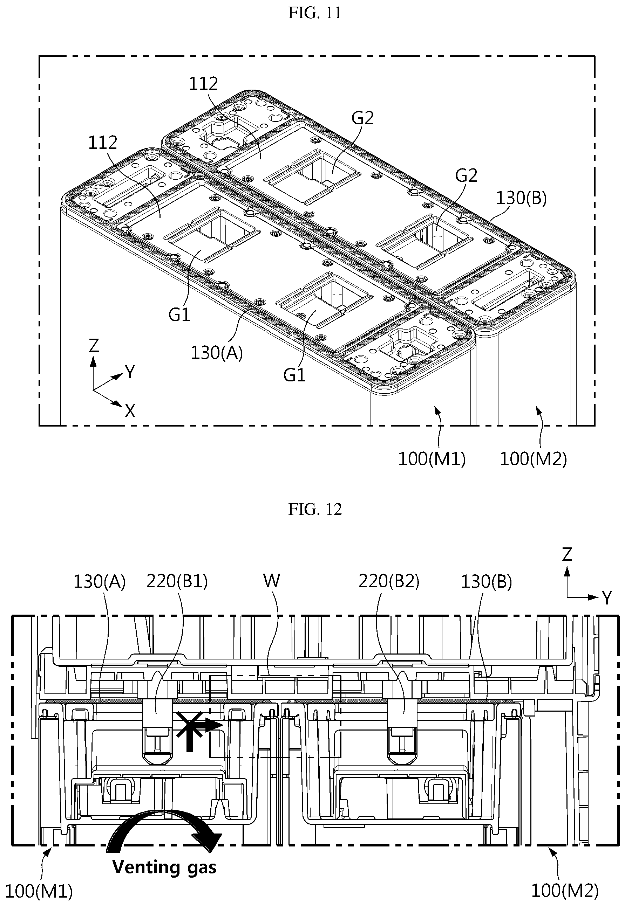

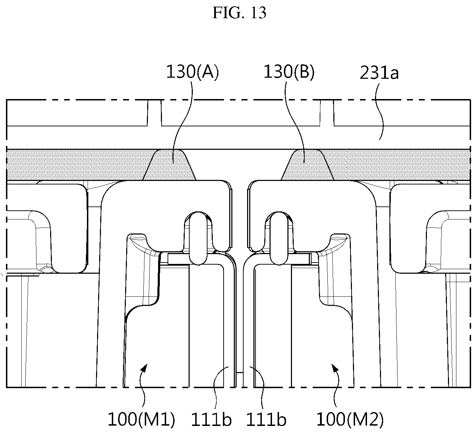

FIG. 11 is a view illustrating the sealing member 130 applied to a top surface of each battery module 100, according to the second embodiment of the present disclosure. FIG. 12 is a schematic partial cross-sectional view illustrating a battery pack for describing a sealing structure of the battery pack, according to the second embodiment of the present disclosure. FIG. 13 is an enlarged view illustrating a portion W of FIG. 12.

As shown in FIG. 11, the battery modules 100 may include the sealing members 130 disposed on top surfaces of the module cases 110 to surround circumferences of the injection holes G1, G2 of the battery modules 100 and protrude beyond the injection holes G1, G2. For example, the fire extinguishing tank unit 200 may be seated on upper portions of the plurality of battery modules 100 and may contact the sealing members 130 to individually seal the upper portions of the plurality of battery modules 100, so that when venting gas is discharged from the second battery module M2, the venting gas is directed only to the second ejection member 220 and is not directed to the first ejection member 220.

According to this configuration, the sealing property of a top surface of each battery module 100 may be further improved. Accordingly, for example, as described above, because, when venting gas is discharged from the second battery module M2, the venting gas ejected from the second injection hole may not move to the first ejection member B1 more reliably due to the sealing member 130, the glass bulb 222 of the first ejection member B1 may not be broken and only the second ejection member B2 may be broken, and thus, a fire extinguishing liquid may be injected only into the second battery module M2 and may not be injected into the first battery module M1.

In more detail, in the battery pack of the present disclosure, the sealing member 130 may be disposed along an entire edge of a top surface of each battery module 100, and the sealing member 130 may contact a lower portion of the fire extinguishing tank unit 200.

The sealing member 130 that is a material having excellent sealing performance and fire resistance may include, for example, silicone rubber, a graphite expandable foam, a metal gasket, or a non-asbestos gasket.

The sealing member 130 may be divided into a first sealing member 130(A) disposed in a closed-loop shape along an edge of a top surface of the module case 110 of the first battery module M1 and a second sealing member 130(B) disposed along an edge of a top surface of the second battery module M2, as shown in FIG. 11.

The fire extinguishing tank unit 200 may cover the top surface of the first battery module M1 and the top surface of the second battery module M2 as a bottom surface of the fire extinguishing tank unit 200 is in close contact with the first sealing member 130(A) and the second sealing member 130(B). For example, as described above, because the fire extinguishing tank unit 200 includes the tank bottom bracket 231, and the support 231a of the tank bottom bracket 231 has a flat surface between the first area R1 and the second area R2 and outside the first area R1 and the second area R2 as shown in FIG. 8, the fire extinguishing tank unit 200 may be in close contact with the first sealing member 130(A) and the second sealing member 130(B). Moreover, because the fire extinguishing tank unit 200 and the control module 300 are simultaneously located on the battery modules 100, the first sealing member 130(A) and the second sealing member 130(B) may be more closely contacted and pressed by the fire extinguishing tank unit 200. Accordingly, when the fire extinguishing tank unit 200 is coupled to upper portions of the battery modules 100, the top surface of the first battery module M1 and the top surface of the second battery module M2 may be individually sealed.

Hence, for example, when venting gas is ejected from the first battery module M1 through the injection hole G1, the ejected venting gas may be blocked from moving from the top surface of the first battery module M1 to the outside of the first battery module M1 by the first sealing member 130(A). Moreover, side surfaces of the first battery module M1 and the second battery module M2 face each other. In this case, as shown in FIGS. 12 and 13, because the first sealing member 130(A) and the second sealing member 130(B) are continuously located in a double structure, it is more difficult for venting gas to move from the top surface of the first battery module M1 to the top surface of the second battery module M2 and contact the second ejection member 220. Hence, as marked by an arrow in FIG. 12, the venting gas is not transferred from the first battery module M1 to the second battery module M2. In this case, the first ejection member 220 may be more affected by the venting gas and may be more rapidly broken. As a result, when venting gas is generated in the first battery module M1, the first ejection member 220 rapidly responds to the venting gas and is broken, and a fire extinguishing agent in the tank body 210 may be rapidly discharged.

Also, because the fire extinguishing agent may be intensively supplied to the battery module 100 in which a thermal event occurs, cooling or fire suppression performance of the battery module 100 in which the thermal event occurs may be more reliably ensured. Also, according to this embodiment of the present disclosure, because the fire extinguishing agent is not injected into the battery module 100 that is normal, the battery module 100 may be continuously used.

An energy storage system (ESS) according to the present disclosure may include one or more battery packs according to the present disclosure. Also, the ESS according to the present disclosure may further include general elements included in an ESS, in addition to the battery packs. In particular, the ESS according to the present disclosure may be a residential ESS (for construction) used to store energy in a house or a building.

While one or more embodiments of the present disclosure have been described with reference to the embodiments and figures, the present disclosure is not limited thereto, and it will be understood by one of ordinary skill in the art that various changes in form and details may be made therein without departing from the scope of the present disclosure as defined by the following claims.

It will be understood by one of ordinary skill in the art that when terms indicating directions such as upper, lower, front, and rear are used, these terms are only for convenience of explanation and may vary according to a position of a target object, a position of an observer, etc.

## Claims

1. A battery pack comprising:
a plurality of battery modules (100) comprising module cases (110), wherein side surfaces of the module cases in which battery cells are accommodated face each other and an injection hole (G1, G2) is formed in a top surface of each of the module cases; and
a fire extinguishing tank unit (200) containing a fire extinguishing agent, located over the plurality of battery modules (100), and configured to supply the fire extinguishing agent only into a battery module (100) in which a thermal event occurs from among the plurality of battery modules (100) through the injection holes (G1, G2), **characterized in that** said battery pack further comprises sealing members (130) each provided on each battery module (100) and disposed on the top surface of the module cases (110) to surround a circumference of the injection hole (G1, G2) of each battery module and protrude beyond the injection hole,
wherein the fire extinguishing tank unit (200) is seated on upper portions of the plurality of battery modules (100) and contacts the sealing members (130) to individually seal the upper portions of the plurality of battery modules (100).

2. The battery pack according to claim 1, wherein the plurality of battery modules (100) are two battery modules (100),
wherein each of the two battery modules is configured to receive the fire extinguishing agent from the fire extinguish tank unit through the injection hole (G1, G2) provided therein.

3. The battery pack according to claim 1, wherein each of the sealing members (130) is made of a fire resistant material and disposed in a closed-loop shape along an edge of the top surface of the module case.

4. The battery pack according to claim 1, wherein each of the sealing members (130) comprises any one of silicone rubber, a graphite expandable foam, a metal gasket, and a non-asbestos gasket.

5. The battery pack according to claim 1, wherein heat dissipation sheets (111c) are provided on rear surfaces of the facing side surfaces of the module cases.

6. The battery pack according to claim 1, wherein the module case comprises:
a middle case (111) having a hollow structure to have an inner space in which the battery cells are accommodated;
a bottom plate (113) coupled to a lower end of the middle case; and
a top plate (112) comprising the injection hole (G1, G2) and coupled to an upper end of the middle case.

7. The battery pack according to claim 6, further comprising a module connect bottom cover (120) provided to integrally support and fix lower portions of the plurality of battery modules (100),
wherein each of the plurality of battery modules is provided so that the bottom plate (113) is fixedly coupled to an upper portion of the module connect bottom cover (120).

8. The battery pack according to claim 1, wherein the fire extinguishing tank unit (200) is configured to, in response to gas ejected from any one of the battery modules (100) to the fire extinguishing tank unit, selectively supply the fire extinguishing agent only into the battery module from which the gas is ejected from among the plurality of battery modules through the injection hole (G1, G2) of the battery module from which the gas is ej ected.

9. The battery pack according to claim 1, wherein the fire extinguishing tank unit (200) comprises: a tank body (210) provided to accommodate the fire extinguishing agent; and a plurality of ejection members (220) having one side coupled to communicate with an inside of the tank body and the other side protruding downward from the tank body,
wherein the plurality of ejection members (220) respectively face the injection holes (G1, G2) of the plurality of battery modules, and are configured to be broken by high temperature or impact to eject the fire extinguishing agent of the tank body.

10. The battery pack according to claim 9, wherein each of the plurality of ejection members (220) comprises any one of a glass bulb, a plastic material, and a vinyl material.

11. The battery pack according to claim 1, wherein the fire extinguishing agent comprises at least one of an antifreezing solution, salt water, and insulating oil.

12. The battery pack according to claim 1, further comprising a control module (300) located on the fire extinguishing tank unit and configured to control a charging operation or a discharging operation of the battery cells of the plurality of battery modules.

13. The battery pack according to claim 12, wherein the fire extinguishing tank unit (200) comprises a connection member to electrically connect the control module (300) to the plurality of battery modules (100), when the control module is seated on the fire extinguishing tank unit.

14. An energy storage system comprising the battery pack according to any one of claims 1 to 13.

## Patentansprüche

1. Batteriepack, umfassend:
eine Mehrzahl von Batteriemodulen (100), welche Modulgehäuse (110) umfassen, wobei Seitenflächen der Modulgehäuse, in welchen Batteriezellen aufgenommen sind, einander zugewandt sind und ein Einspritzloch (G1, G2) in einer oberen Fläche jedes der Modulgehäuse gebildet ist; und
eine Feuerlöschtankeinheit (200), welche ein Feuerlöschmittel beinhaltet, welche über der Mehrzahl von Batteriemodulen (100) angeordnet ist und dazu eingerichtet ist, das Feuerlöschmittel nur einem Batteriemodul (100) zuzuführen, in welchem ein thermisches Ereignis stattfindet, unter der Mehrzahl von Batteriemodulen (100), durch die Einspritzlöcher (G1, G2), **dadurch gekennzeichnet, dass** der Batteriepack ferner Abdichtungselemente (130) umfasst, welche jeweils an jedem Batteriemodul (100) bereitgestellt sind und an der oberen Fläche der Modulgehäuse (110) angeordnet sind, um einen Umfang des Einspritzlochs (G1, G2) jedes Batteriemoduls zu umgeben und über das Einspritzloch hinaus vorzustehen,
wobei die Feuerlöschtankeinheit (200) auf oberen Abschnitten der Mehrzahl von Batteriemodulen (100) sitzt und die Abdichtelemente (130) kontaktiert, um die oberen Abschnitte der Mehrzahl von Batteriemodulen (100) individuell abzudichten.

2. Batteriepack nach Anspruch 1, wobei die Mehrzahl von Batteriemodulen (100) zwei Batteriemodule (100) ist,
wobei jedes der zwei Batteriemodule dazu eingerichtet ist, das Feuerlöschmittel von der Feuerlöschtankeinheit durch das Einspritzloch (G1, G2) aufzunehmen, welches darin bereitgestellt ist.

3. Batteriepack nach Anspruch 1, wobei jedes der Abdichtelemente (130) aus einem feuerfesten Material hergestellt ist und in einer geschlossenen Ringform entlang eines Rands der oberen Fläche des Modulgehäuses angeordnet ist.

4. Batteriepack nach Anspruch 1, wobei jedes der Abdichtelemente (130) eines aus einem Silikongummi, einem Graphit-Expansionsschaum, einer Metalldichtung und einer asbestfreien Dichtung umfasst.

5. Batteriepack nach Anspruch 1, wobei Wärmeableitungsbahnen (111c) an hinteren Flächen der zugewandten Seitenflächen der Modulgehäuse bereitgestellt sind.

6. Batteriepack nach Anspruch 1, wobei das Modulgehäuse umfasst:
ein Mittelgehäuse (111), welches eine hohle Struktur aufweist, um einen inneren Raum aufzuweisen, in welchem die Batteriezellen aufgenommen sind;
eine untere Platte (113), welche mit einem unteren Ende des Mittelgehäuses gekoppelt ist; und
eine obere Platte (112), welche das Einspritzloch (G1, G2) umfasst und mit einem oberen Ende des Mittelgehäuses gekoppelt ist.

7. Batteriepack nach Anspruch 6, ferner umfassend eine untere Modulverbindungsabdeckung (120), welche bereitgestellt ist, um untere Abschnitte der Mehrzahl von Batteriemodulen (100) integral zu haltern und diese zu fixieren,
wobei jedes der Mehrzahl von Batteriemodulen bereitgestellt ist, so dass die untere Platte (113) mit einem oberen Abschnitt der unteren Modulverbindungsabdeckung (120) starr gekoppelt ist.

8. Batteriepack nach Anspruch 1, wobei die Feuerlöschtankeinheit (200) dazu eingerichtet ist, in Reaktion auf ein Gas, welches aus einem aus den Batteriemodulen (100) zu der Feuerlöschtankeinheit ausgestoßen ist, das Feuerlöschmittel nur dem Batteriemodul selektiv zuzuführen, von welchem das Gas ausgestoßen ist, unter der Mehrzahl von Batteriemodulen, durch das Einspritzloch (G1, G2) des Batteriemoduls, von welchem das Gas ausgestoßen ist.

9. Batteriepack nach Anspruch 1, wobei die Feuerlöschtankeinheit (200) umfasst: einen Tankkörper (210), welcher bereitgestellt ist, um das Feuerlöschmittel aufzunehmen; und eine Mehrzahl von Ausstoßelementen (220), welche eine Seite, welche gekoppelt ist, um mit einem Inneren des Tankkörpers zu kommunizieren, und die andere Seite aufweisen, welche abwärts von dem Tankkörper vorsteht,
wobei die Mehrzahl von Ausstoßelementen (220) jeweils den Einspritzlöchern (G1, G2) der Mehrzahl von Batteriemodulen zugewandt ist und dazu eingerichtet ist, durch eine hohe Temperatur oder eine Stoßkraft gebrochen zu werden, um das Feuerlöschmittel aus dem Tankkörper auszustoßen.

10. Batteriepack nach Anspruch 9, wobei jedes der Mehrzahl von Ausstoßelementen (220) eines aus einem Glaskolben, einem Kunststoffmaterial und einem Vinylmaterial umfasst.

11. Batteriepack nach Anspruch 1, wobei das Feuerlöschmittel wenigstens eines aus einer gefrierfesten Lösung, Salzwasser und Isolieröl umfasst.

12. Batteriepack nach Anspruch 1, ferner umfassend ein Steuermodul (300), welches an der Feuerlöschtankeinheit angeordnet ist und dazu eingerichtet ist, eine Ladebetätigung oder eine Entladebetätigung der Batteriezellen der Mehrzahl von Batteriemodulen zu steuern.

13. Batteriepack nach Anspruch 12, wobei die Feuerlöschtankeinheit (200) ein Verbindungselement umfasst, um das Steuermodul (300) mit der Mehrzahl von Batteriemodulen (100) elektrisch zu verbinden, wenn das Steuermodul auf der Feuerlöschtankeinheit sitzt.

14. Energiespeichersystem, umfassend den Batteriepack nach einem der Ansprüche 1 bis 13.

## Revendications

1. Bloc-batterie comprenant :
une pluralité de modules de batterie (100) comprenant des boîtiers de module (110), dans lequel les surfaces latérales des boîtiers de module dans lesquels les cellules de batterie sont logées sont orientées l'une vers l'autre et un orifice d'injection (G1, G2) est formé dans une surface supérieure de chacun des boîtiers de module ; et
une unité de réservoir d'extinction d'incendie (200) contenant un agent d'extinction d'incendie, située sur la pluralité de modules de batterie (100), et conçue pour alimenter l'agent d'extinction d'incendie uniquement dans un module de batterie (100) dans lequel un événement thermique se produit parmi la pluralité de modules de batterie (100) à travers les orifices d'injection (G1, G2), **caractérisé en ce que** ledit bloc-batterie comprend en outre des organes d'étanchéité (130) chacun prévus sur chaque module de batterie (100) et disposés sur la surface supérieure des boîtiers de module (110) pour entourer une circonférence de l'orifice d'injection (G1, G2) de chaque module de batterie et faire saillie au-delà de l'orifice d'injection,
dans lequel l'unité de réservoir d'extinction d'incendie (200) est assise sur des portions supérieures de la pluralité de modules de batterie (100) et entre en contact avec les organes d'étanchéité (130) pour sceller individuellement les portions supérieures de la pluralité de modules de batterie (100).

2. Bloc-batterie selon la revendication 1, dans lequel la pluralité de modules de batterie (100) sont deux modules de batterie (100),
dans lequel chacun des deux modules de batterie est conçu pour recevoir l'agent d'extinction d'incendie de l'unité de réservoir d'extinction d'incendie à travers l'orifice d'injection (G1, G2) qui y est prévu.

3. Bloc-batterie selon la revendication 1, dans lequel chacun des organes d'étanchéité (130) est constitué d'un matériau résistant au feu et disposé en forme de boucle fermée le long d'un bord de la surface supérieure du boîtier de module.

4. Bloc-batterie selon la revendication 1, dans lequel chacun des organes d'étanchéité (130) comprend l'un parmi caoutchouc silicone, mousse de graphite expansible, joint métallique et joint non-amiante.

5. Bloc-batterie selon la revendication 1, dans lequel des feuilles de dissipation de chaleur (111c) sont prévues sur des surfaces arrière des surfaces latérales opposées des boîtiers de module.

6. Dispositif de commande de batterie selon la revendication 1, dans lequel le boîtier de module comprend :
un boîtier central (111) ayant une structure creuse pour avoir un espace intérieur dans lequel les cellules de batterie sont logées ;
une plaque inférieure (113) reliée à une extrémité inférieure du boîtier central ; et
une plaque supérieure (112) comprenant l'orifice d'injection (G1, G2) et reliée à une extrémité supérieure du boîtier central.

7. Bloc-batterie selon la revendication 6, comprenant en outre un couvercle inférieur de connexion de module (120) prévu pour soutenir et fixer intégralement des portions inférieures de la pluralité de modules de batterie (100),
dans lequel chacun de la pluralité de modules de batterie est prévu de manière à ce que la plaque inférieure (113) soit fixée de façon permanente à une portion supérieure du couvercle inférieur de connexion du module (120).

8. Bloc-batterie selon la revendication 1, dans lequel l'unité de réservoir d'extinction d'incendie (200) est conçue pour, en réponse au gaz éjecté de l'un quelconque des modules de batterie (100) à l'unité de réservoir d'extinction d'incendie, alimenter sélectivement l'agent d'extinction d'incendie uniquement dans le module de batterie à partir duquel le gaz est éjecté parmi la pluralité de modules de batterie à travers l'orifice d'injection (G1, G2) du module de batterie à partir duquel le gaz est éjecté.

9. Bloc-batterie selon la revendication 1, dans lequel l'unité de réservoir d'extinction d'incendie (200) comprend : un corps de réservoir (210) prévu pour accueillir l'agent d'extinction d'incendie ; et une pluralité d'organes d'éjection (220) ayant un côté relié à l'intérieur du corps de réservoir et l'autre côté faisant saillie vers le bas à partir du corps de réservoir,
dans lequel la pluralité d'organes d'éjection (220) font respectivement face aux orifices d'injection (G1, G2) de la pluralité de modules de batterie, et sont conçus pour être brisés par une température ou un impact élevés pour éjecter l'agent d'extinction d'incendie du corps de réservoir.

10. Bloc-batterie selon la revendication 9, dans lequel chacun de la pluralité d'organes d'éjection (220) comprend l'un quelconque parmi ampoule en verre, matériau plastique et matériau vinylique.

11. Bloc-batterie selon la revendication 1, dans lequel l'agent d'extinction d'incendie comprend au moins l'un parmi solution antigel, eau salée et huile isolante.

12. Bloc-batterie selon la revendication 1, comprenant en outre un module de commande (300) situé sur l'unité de réservoir d'extinction d'incendie et conçu pour gérer une opération de charge ou une opération de décharge des cellules de batterie des différents modules de batterie.

13. Bloc-batterie selon la revendication 12, dans lequel l'unité de réservoir d'extinction d'incendie (200) comprend un organe de connexion pour connecter électriquement le module de commande (300) à la pluralité de modules de batterie (100), lorsque le module de commande est disposé sur l'unité de réservoir d'extinction d'incendie.

14. Système de stockage d'énergie comprenant le module de batterie selon l'une quelconque des revendications 1 à 19.
